# EUROPÄISCHE PATENTSCHRIFT

(11) **EP 2 660 084 B1**
(45) Veröffentlichungstag und Bekanntmachung des Hinweises auf die Patenterteilung: **16.07.2014**
(21) Anmeldenummer: 12166145.8
(22) Anmeldetag: 30.04.2012
(51) Int. Cl.: B60H 1/00, B60H 1/28, B62D 25/08

(54) **Wasserkasten für ein Kraftfahrzeug**
Water chamber for a motor vehicle
Réservoir d'eau pour un véhicule automobile

(43) Veröffentlichungstag der Anmeldung: 06.11.2013
(73) Patentinhaber: Weidmann Plastics Technology AG, 8640 Rapperswil (CH)
(72) Erfinder: Harke, Stefan, 8832 Wollerau (CH)
(74) Vertreter: Rutz, Andrea

(56) Entgegenhaltungen:
- EP-A2- 1 314 589
- DE-A1-102005 018 043
- US-A- 4 412 425

## Beschreibung

### TECHNISCHES GEBIET

Die vorliegende Erfindung betrifft einen Wasserkasten für ein Kraftfahrzeug, ein Verfahren zur Temperierung eines Wasserkastens sowie ein Kraftfahrzeug mit einem Wasserkasten. Wasserkästen dienen in Kraftfahrzeugen dazu, Wasser von Luft, welche durch ein Klimagerät angesaugt wird, abzuscheiden.

### STAND DER TECHNIK

Zur Erwärmung bzw. Kühlung der Luft im Fahrgastraum wird bei Kraftfahrzeugen üblicherweise mittels eines Klimageräts Frischluft von aussen her angesaugt und dem Fahrgastraum zugeführt. Ein Klimagerät weist zumindest einen Verdampfer und/oder einen Heizer auf, mit welchem die Frischluft auf eine erwünschte Temperatur abgekühlt bzw. erwärmt. werden kann. Zum Ansaugen der Luft kann es zudem ein Luftfördermittel, wie insbesondere ein Ventilator, mitumfassen.

Damit dem Klimagerät möglichst trockene und tropfenarme Frischluft zur Verfügung gestellt werden kann, ist in Kraftfahrzeugen meist ein Wasserkasten vorgesehen. Die Aufgabe des Wasserkastens besteht darin, Wasser aus der angesaugten Frischluft abzuscheiden, sodass möglichst wenig Wassertropfen in das Klimagerät gelangen. Wasser kann insbesondere bei Regen in Form von Schwallwasser oder in Form von Tröpfchen in der angesaugten Frischluft enthalten sein. Durch das Vorsehen eines Wasserkastens soll ein Absetzen von Wassertropfen im Luftfilter des Klimageräts, was einen unerwünschten Pilzbefall zur Folge haben kann, verhindert werden.

Ein Fahrzeug mit einem Klimagerät sowie einem derartigen Wasserkasten gemäß Oberbegriff des Anspruchs 1 ist in der US 5,518,449 beschrieben.

Die Temperierung, also die Erwärmung bzw. Abkühlung, der angesaugten Luft im Klimagerät auf eine gewünschte Temperatur erfordert jedoch eine bedeutende Menge an Energie. Bei Elektrofahrzeugen und Hybridfahrzeugen muss dazu elektrische Energie aus der Batterie bzw. dem Akkumulator bereitgestellt werden. Dies kann die Gesamtenergiebilanz solcher Kraftfahrzeuge erheblich beeinträchtigen.

Um den Energieverbrauch des Klimageräts zu reduzieren, wird in der DE 199 32 691 vorgeschlagen, die angesaugte Frischluft vorzukühlen. Dies wird dadurch erreicht, dass die Frischluft befeuchtet und der dabei auftretende Verdunstungseffekt ausgenutzt wird. Bei dieser Methode wird jedoch zwangsweise der Feuchtigkeitsgehalt der angesaugten Luft erhöht. Die DE 10 2005 018 043 A1 und die US 4 412 425 zeigen die Abwärmenutzung mittels im Klimagerät vorgesehenen Wärmetauschern.

In der DE 196 13 684 wird vorgeschlagen, das am Verdampfer des Klimageräts gebildete Kondenswasser zu sammeln, um damit ein im Klimagerät zirkulierendes Kältemittel zu kühlen und dadurch den Wirkungsgrad des Klimageräts zu erhöhen. Diese Methode verringert zwar die Energie, welche zum Abkühlen der Frischluft benötigt wird. Die Energie, welche jedoch insbesondere im Winter zum Erwärmen der angesaugten Frischluft benötigt wird, bleibt dadurch unbeeinflusst.

### DARSTELLUNG DER ERFINDUNG

Es ist also eine Aufgabe der vorliegenden Erfindung, den Energieverbrauch bei der Temperierung des Fahrgastraums eines Kraftfahrzeugs zu senken. Zur Lösung dieser Aufgabe wird ein Wasserkasten vorgeschlagen, wie er in Anspruch 1 angegeben ist. Ausserdem wird in Anspruch 13 ein Verfahren zur Temperierung des Wasserkastens eines Kraftfahrzeugs sowie in Anspruch 14 ein Kraftfahrzeug mit einem derartigen Wasserkasten angegeben. Vorteilhafte Ausgestaltungen der Erfindung sind in den abhängigen Ansprüchen angegeben.

Die vorliegende Erfindung stellt also einen Wasserkasten für ein Kraftfahrzeug zur Verfügung, aufweisend
eine Wandung, welche einen ersten Innenraum begrenzt;
zumindest eine Lufteinlassöffnung, durch welche hindurch Luft, insbesondere Frischluft, in den ersten Innenraum einströmen kann;
zumindest eine Luftauslassöffnung, durch welche hindurch Luft aus dem ersten Innenraum ausströmen kann; sowie
zumindest eine Wasseraustrittsöffnung, welche zum Abführen von Wasser aus dem ersten Innenraum geeignet ist.

Der Wasserkasten ist dabei als Wärmetauscher ausgebildet, mit einem Wärmetauschelement, welches dazu dient, thermische Energie von Abluft in den ersten Innenraum zu übertragen. Zudem weist der Wasserkasten zumindest eine Struktur auf, welche dazu dient, Abluft gezielt zum Wärmetauschelement hin zu leiten.

Dadurch, dass der erfindungsgemässe Wasserkasten als Wärmetauscher ausgebildet ist, kann bereits temperierte Abluft dazu verwendet werden, um die angesaugte Frischluft im Wasserkasten vorzutemperieren (also vorzukühlen oder vorzuheizen). Auf diese Weise kann eine Energieeinsparung beim Klimagerät erreicht werden. Dazu kann insbesondere Abluft aus dem Fahrgastraum des Kraftfahrzeugs verwendet werden. Alternativ wäre es aber auch denkbar, zum Beispiel Abluft aus dem Motorenraum zu verwenden. Gegenüber einer Lösung mit einem Wasserkasten und einem Wärmetauscher, welcher separat vom Wasserkasten im Kraftfahrzeug vorgesehen ist, hat eine Ausbildung des Wasserkastens als Wärmetauscher den Vorteil, dass insgesamt weniger Bauraum im Kraftfahrzeug beansprucht wird. Der erfindungsgemässe Wasserkasten erlaubt also insbesondere auch eine sehr kompakte, gemeinsame Unterbringung dieser beiden funktionellen Bauelemente im Kraftfahrzeug, also eines Bauelements zum Abscheiden von Wasser aus der Frischluft einerseits, und eines Bauelements zur Übertragung der thermischen Energie von Abluft auf die Frischluft andererseits.

Orts- und Richtungsangaben wie oben, unten, vertikal, horizontal, nach oben, nach unten etc. betreffen im Folgenden jeweils den Wasserkasten, welcher auf bestimmungsgemässe Weise in einem Kraftfahrzeug eingebaut ist. Die Lufteinlassöffnung und vorteilhaft auch die Luftauslassöffnung sind dann üblicherweise oberhalb der Wasseraustrittsöffnung angeordnet.

Die Luft kann somit den Wasserkasten via die Lufteinlassöffnung, den ersten Innenraum und die Luftauslassöffnung durchströmen und dabei Wasser, das heisst insbesondere Schwallwasser und Wassertröpfchen, abscheiden.

Das Wärmetauschelement kann beliebig ausgestaltet sein, solange es den Zweck erfüllt, thermische Energie von Abluft in den ersten Innenraum zu übertragen. Bevorzugt bildet aber zumindest ein Teil der Wandung, welche den ersten Innenraum begrenzt, selbst das Wärmetauschelement. Noch mehr bevorzugt bildet ein Grossteil der Wandung, welche den ersten Innenraum begrenzt, das Wärmetauschelement. Am meisten bevorzugt bildet sogar im Wesentlichen die gesamte Wandung, welche den ersten Innenraum begrenzt, das Wärmetauschelement.

Nach einer Weiterbildung der Erfindung begrenzt die Struktur, welche dazu dient, Abluft gezielt zum Wärmetauschelement hin zu leiten, zusammen mit dem Wärmetauschelement einen zweiten Innenraum. Bevorzugt ist dann zumindest eine Ablufteinlassöffnung vorhanden, durch welche hindurch Abluft in den zweiten Innenraum einströmen kann, sowie zumindest eine Abluftauslassöffnung, durch welche hindurch Abluft aus dem zweiten Innenraum ausströmen kann. Insbesondere bevorzugt bildet der zweite Innenraum mit Ausnahme der Ablufteinlassöffnungen und der Abluftauslassöffnungen einen geschlossenen Raum. Vorteilhaft sind die Ablufteinlassöffnungen und die Abluftauslassöffnungen derart angeordnet, dass im zweiten Innenraum eine Abluftströmung entsteht, die den ersten Innenraum über einen möglichst grossen Bereich umgibt. Es können insbesondere auch nur eine einzige Ablufteinlassöffnung und eine einzige Abluftauslassöffnung vorhanden sein. Die Struktur kann alternativ zum Beispiel aber auch in Form von einfachen Leitelementen ausgebildet sein, welche den Abluftstrom derart lenken, dass er gezielt zum Wärmetauschelement hin geleitet wird.

Die Wandung, welche den ersten Innenraum begrenzt, umfasst in der Regel eine umlaufende Seitenwandung. Bevorzugt umgibt der zweite Innenraum dann diese Seitenwandung im Wesentlichen vollständig. Dabei bildet bevorzugt zumindest ein Teil des zweiten Innenraums einen Ringraum, der sich um den ersten Innenraum herum erstreckt.

Die Wandung, welche den ersten Innenraum begrenzt, umfasst zudem üblicherweise eine Bodenwandung, innerhalb welcher die Wasseraustrittsöffnung angeordnet ist. Vorteilhaft ist diese Bodenwandung in Form eines Trichters ausgestaltet, wobei die Wasseraustrittsöffnung am untersten Punkt dieses Trichters angeordnet ist. Bevorzugt überdeckt dann der zweite Innenraum diese Bodenwandung zu einem grossen Teil nach unten hin, insbesondere bevorzugt sogar im Wesentlichen vollständig.

Des Weiteren umfasst die Wandung, welche den ersten Innenraum begrenzt, üblicherweise eine Deckenwandung. Bevorzugt überdeckt der zweite Innenraum diese Deckenwandung zu einem grossen Teil nach oben hin, insbesondere bevorzugt sogar im Wesentlichen vollständig.

Vorteilhaft erstreckt sich der zweite Innenraum über alle den ersten Innenraum begrenzenden Wandungen.

Die Wasseraustrittsöffnung ist in der Regel seitlich von der Innenfläche eines umlaufenden Ablaufrohrs begrenzt. In einer bevorzugten Ausführungsform erstreckt sich dieses Ablaufrohr insbesondere in die vertikale Richtung durch den zweiten Innenraum hindurch.

Um das Abscheiden von Wasser aus der einströmenden Frischluft zu verbessern, weist der Wasserkasten bevorzugt ein Umlenkelement auf, welches in den ersten Innenraum hineinragt, und welches von der einströmenden Luft in vertikaler und/oder horizontaler Richtung umströmt wird. In einer Weiterbildung weist dieses Umlenkelement einen Hohlraum auf, der dazu geeignet ist, von Abluft durchströmt zu werden. Das Umlenkelement bildet dann zumindest einen Teil des Wärmetauschelements.

Bevorzugt weist das Wärmetauschelement Wärmetauschstrukturen zum Vergrössern der Oberfläche des Wärmetauschelements auf. Bei den Wärmetauschstrukturen kann es sich beispielsweise um Rippen, Rillen, Lamellen oder Vorsprünge handeln. Die Wärmetauschstrukturen können insbesondere auf der dem ersten Innenraum zugewandten Seite des Wärmetauschelements angeordnet sein. Sie können aber auch auf derjenigen Seite des Wärmetauschelements angeordnet sein, welche von der Abluft umströmt wird, das heisst, falls ein zweiter Innenraum vorhanden ist, auf der dem zweiten Innenraum zugewandten Seite. Insbesondere bevorzugt sind die Wärmetauschstrukturen aber derart ausgestaltet, dass das Wärmetauschelement eine oder mehrere wellenförmig ausgestaltete Wandungen aufweist, welche abwechselnd nach innen und nach aussen gebogen bzw. gewölbt sind, so dass die entsprechende Oberfläche jeweils sowohl innen- als auch aussenseitig vergrössert ist.

In einer Weiterbildung weist der Wasserkasten zumindest eine Leitung auf, um zumindest einen Teil des aus der Wasseraustrittsöffnung ausströmenden Wassers zum Wärmetauschelement hin zu leiten. Vorteilhaft dient diese Leitung sogar dazu, das gesamte aus der Wasseraustrittsöffnung ausströmende Wasser zum Wärmetauschelement hin zu leiten. Aufgrund des Verdunstungseffekts kann dies eine zusätzliche Kühlung des Wärmetauschelements und somit der in den Wasserkasten einströmenden Frischluft bewirken. Vorteilhaft wird dabei das ausströmende Wasser derart zum Wärmetauschelement hin geleitet, dass es zuerst mit Abluft vermengt und dann zusammen mit dieser zum Wärmetauschelement hin geleitet wird.

Bevorzugt weist das Wärmetauschelement eine Wandstärke von weniger als 1 mm, insbesondere von weniger als 0.5 mm, auf. Dadurch kann eine gute Wärmeleitfähigkeit des Wärmetauschelements unabhängig vom verwendeten Material erreicht werden. Alternativ oder zusätzlich dazu kann das Wärmetauschelement auch aus einem gut wärmeleitfähigen Material hergestellt sein, wie insbesondere Metall. Es kann aber auch aus einem Kunststoff, wie insbesondere Polypropylen, hergestellt sein. Falls das Wärmetauschelement aus Polypropylen (PP) hergestellt ist, weist es bevorzugt einen Anteil von 20 % Talkum auf.

Es wird ausserdem ein Verfahren zur Temperierung des Wasserkastens eines Kraftfahrzeugs angegeben, welches zumindest die folgenden Schritte aufweist:
- Bereitstellen eines Klimageräts mit einem Luftfördermittel, sowie eines als Wärmetauscher ausgebildeten Wasserkastens mit einer Lufteinlassöffnung und einem Wärmetauschelement in einem Kraftfahrzeug;
- Ansaugen von Frischluft mittels des Luftfördermittels durch die Lufteinlassöffnung und den Wasserkasten hindurch zum Klimagerät, und Weiterleiten dieser Luft vom Klimagerät in einen Fahrgastraum des Kraftfahrzeugs.

Das Verfahren weist zudem den Schritt auf, Abluft, welche aus dem Fahrgastraum oder dem Motorraum stammen kann, gezielt zum Wärmetauschelement hin zu leiten, um dadurch die Frischluft, welche durch den Wasserkasten hindurch strömt, zu temperieren.

Des Weiteren wird ein Kraftfahrzeug, insbesondere ein Personenkraftwagen, d.h. ein Automobil, angegeben, aufweisend
einen Fahrgastraum;
ein Klimagerät mit einem Luftfördermittel, wie zum Beispiel einem Ventilator; sowie
einen Wasserkasten, der als Wärmetauscher ausgebildet ist und ein Wärmetauschelement sowie eine Lufteinlassöffnung aufweist, an welcher mittels des Luftfördermittels, Frischluft ansaugbar ist, die durch den Wasserkasten zum Klimagerät und von diesem in den Fahrgastraum gelangt,
wobei zudem zumindest eine Struktur vorhanden ist, welche dazu dient, Abluft gezielt zum Wärmetauschelement des Wasserkastens hin zu leiten. Dabei kann es sich insbesondere um Abluft aus dem Fahrgastraum, alternativ aber auch um Abluft aus dem Motorraum handeln.

Um die Abluft zum Wasserkasten hin zu leiten, kann im Kraftfahrzeug ein eigens dafür vorgesehenes Luftfördermittel, wie insbesondere ein Ventilator, vorhanden sein.

Bevorzugt weist das Kraftfahrzeug zumindest eine Leitung auf, um zumindest einen Teil des Wassers, das im Klimagerät zum Beispiel in Form von Kondenswasser anfällt, zum Wärmetauschelement hin zu leiten. Vorteilhaft dient diese Leitung sogar dazu, das gesamte im Klimagerät anfallende Wasser zum Wärmetauschelement hin zu leiten. Aufgrund des Verdunstungseffekts kann dies eine zusätzliche Kühlung des Wärmetauschelements und somit der in den Wasserkasten einströmenden Frischluft bewirken. Vorteilhaft wird dabei das Wasser derart zum Wärmetauschelement hin geleitet, dass es zuerst mit Abluft vermengt und dann zusammen mit dieser zum Wärmetauschelement hin geleitet wird.

### KURZE BESCHREIBUNG DER ZEICHNUNGEN

Bevorzugte Ausführungsfonnen der Erfindung werden im Folgenden anhand der Zeichnungen beschrieben, die lediglich zur Erläuterung dienen und nicht einschränkend auszulegen sind. Insbesondere können die in den Zeichnungen dargestellten Grössenverhältnisse bei einem konkreten Ausführungsbeispiel auch anders ausgeführt sein. In den Zeichnungen zeigen:
- Fig. 1: eine zentrale Schnittansicht durch ein Kraftfahrzeug mit einem Klimagerät und einem Wasserkasten gemäss einer ersten, erfmdungsgemässen Ausführungsform;
- Fig. 2: eine zentrale Schnittansicht durch den Wasserkasten und durch das Klimagerät des in der Fig. 1 gezeigten Kraftfahrzeugs;
- Fig. 3: eine zentrale Schnittansicht durch ein Klimagerät und durch den in der Fig. 2 gezeigten Wasserkasten, wobei hier zusätzlich das im Klimagerät anfallende Wasser zu Kühlzwecken verwendet wird;
- Fig. 4: eine zentrale Schnittansicht durch ein Klimagerät und durch einen Wasserkasten gemäss einer zweiten, erfmdungsgemässen Ausführungsform;
- Fig. 5: eine zentrale Schnittansicht durch ein Klimagerät und durch einen Wasserkasten gemäss einer dritten, erfindungsgemässen Ausführungsform; sowie
- Fig. 6: eine zentrale Schnittansicht durch ein Klimagerät und durch den in der Fig. 2 gezeigten Wasserkasten, wobei hier zusätzlich das im Wasserkasten anfallende Wasser zu Kühlzwecken verwendet wird.

### BESCHREIBUNG BEVORZUGTER AUSFÜHRUNGSFORMEN

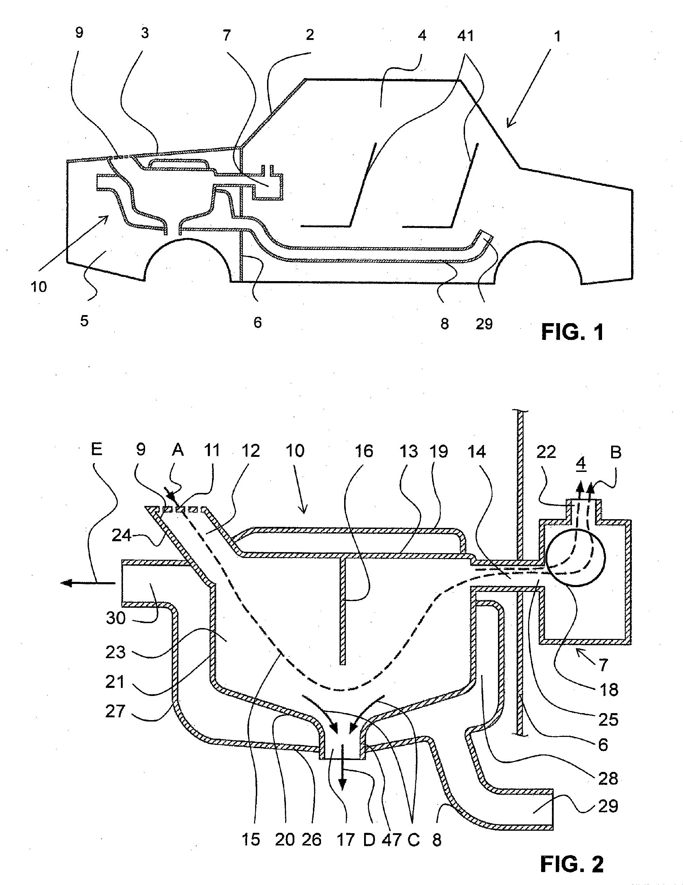

In der Fig. 1 ist schematisch ein Kraftfahrzeug 1 dargestellt, in welchem ein Wasserkasten 10 gemäss einer ersten erfindungsgemässen Ausführungsform vorgesehen ist. Der Wasserkasten 10 ist im Motorraum 5 des Kraftfahrzeugs 1 untergebracht und weist eine Lufteinlassöffnung 9 auf, welche im Bereich einer Motorhaube 3 nach aussen hin mündet. Durch das Innere des Wasserkastens 10 hindurch kann von einem Klimagerät 7 Frischluft durch die Lufteinlassöffnung 9 angesaugt werden, welche vom Klimagerät 7 aus in den Fahrgastraum 4 weitergeleitet wird. Im Vergleich zum Wasserkasten 10 ist das Klimagerät 7 auf der gegenüberliegenden Seite einer Stirnwand 6 angeordnet, welche den Motorraum 5 vom Fahrgastraum 4 trennt. Üblicherweise ist das Klimagerät 7 im Armaturenbrett oder in einem vorderen Bereich im Fahrgastraum 4 des Kraftfahrzeugs 1 angeordnet. Die Lufteinlassöffnung 9 könnte auch an einer beliebigen anderen Stelle des Kraftfahrzeugs 1, insbesondere im Übergangsbereich zwischen der Windschutzscheibe 2 und der Motorhaube 3 angeordnet sein.

Die im Fahrgastraum 4 enthaltene Luft wird über eine Ansaugleitung 8 zum Wasserkasten 10 geleitet, um die durch den Wasserkasten 10 einströmende Frischluft vorzutemperieren. Die Ansaugleitung 8 kann in Bezug auf den Wasserkasten 10 ein separates Element darstellen, welches zum Beispiel mittels einer Schraubverbindung an diesen anschliessbar ist. Die Ansaugleitung 8 weist eine Ablufteinlassöffnung 29 auf, welche bevorzugt in einem hinteren Bereich des Kraftfahrzeugs 1, insbesondere in einem Bereich hinter dem im Kraftfahrzeug 1 zuhinterst angeordneten Fahrgastsitz 41, angeordnet ist. Eine derartige Anordnung der Ablufteinlassöffnung 29 der Ansaugleitung 8 ermöglicht eine optimale Luftzirkulation im Fahrgastraum 4.

In der Regel bewirkt ein einziges, im Klimagerät 7 angeordnetes Luftfördermittel die gesamte Luftzirkulation ausgehend vom Ansaugen der Frischluft durch die Lufteinlassöffnung 9 bis hin zum Ausstossen der Abluft durch die Abluftauslassöffnung 30 des Wasserkastens 10. Bei diesem Luftfördermittel kann es sich insbesondere um einen Ventilator 18 (siehe Fig. 2) handeln. Um Abluft aus dem Fahrgastraum 4 anzusaugen, können innerhalb der Ansaugleitung 8 oder im Bereich des Wasserkastens 10 an einer beliebigen Stelle im Fahrgastraum 4 oder im Motorraum 5 aber auch weitere Luftfördermittel vorgesehen sein. Vorteilhaft werden diese Luftfördermittel dann in Abhängigkeit vom Betriebszustand des Klimageräts 7 gesteuert.

In der Fig. 2 ist der in Fig. 1 gezeigte Wasserkasten 10 im Detail dargestellt. Der Wasserkasten 10 bildet einen Hohlkörper mit einer inneren Seitenwandung 21, die sich umlaufend von einer inneren Bodenwandung 20 aus nach oben hin erstreckt. Zusammen mit einer inneren Deckenwandung 13 begrenzen die innere Seitenwandung 21 und die innere Bodenwandung 20 einen ersten Innenraum 23. Die innere Seitenwandung 21 ist im Wesentlichen hohlzylindrisch ausgestaltet, wobei sie sich nach oben hin leicht aufweiten kann. Die innere Bodenwandung 20 ist trichterförmig ausgebildet und weitet sich von unten nach oben hin auf. In ihrem untersten Punkt weist die innere Bodenwandung 20 eine zentral angeordnete Wasseraustrittsöffnung 17 auf, welche seitlich umlaufend von der Innenfläche eines Ablaufrohrs 47 begrenzt wird, die sich von der inneren Bodenwandung 20 aus nach unten hin erstreckt.

Im Übergangsbereich zwischen der inneren Deckenwandung 13 und der inneren Seitenwandung 21 ist eine Zuleitung 24 vorgesehen, welche einen Einlasskanal 12 bildet. Dieser Einlasskanal 12 verbindet die Lufteinlassöffnung 9 mit dem ersten Innenraum 23 des Wasserkastens 10. Diametral gegenüberliegend zur Zuleitung 24 ist im oberen Bereich der inneren Seitenwandung 21 eine Abführleitung vorgesehen, welche einen Luftkanal 14 bildet. Der Luftkanal 14 durchsetzt die Stirnwand 6 und mündet in eine Luftauslassöffnung 25.

Gegenüberliegend zur Wasseraustrittsöffnung 17 ist an der inneren Deckenwandung 13 ein Umlenkelement 16 angebracht, welches sich von der inneren Deckenwandung 13 in senkrechter Richtung in den ersten Innenraum 23 hinein erstreckt. Das Umlenkelement 16 erstreckt sich dabei geringfügig weniger weit in die vertikale Richtung als die innere Seitenwand 21. In die horizontale Richtung erstreckt sich das Umlenkelement 16 in diametraler Richtung über die innere Deckenwandung 13, senkrecht zu einer imaginären geraden Linie, welche die Mündungen des Einlasskanals 12 und des Luftkanals 14 in den ersten Innenraum 23 hinein miteinander verbindet.

Im Bereich der Lufteinlassöffnung 9 kann ein Gitter 11 vorgesehen sein, um zu verhindern, dass unerwünschte, im Schwallwasser enthaltene Bestandteile in die Zuleitung 24 und somit in den ersten Innenraum 23 eindringen. Insbesondere ein Eindringen von Schnee und Laub soll dadurch verhindert werden.

Die Luftauslassöffnung 25 mündet in das Klimagerät 7, welches ein Luftfördermittel in Form eines Ventilators 18 aufweist. Das Klimagerät 7 umfasst zudem einen Verdampfer und/oder ein Heizelement, welche in den Figuren jedoch beide nicht dargestellt sind. Das Klimagerät 7 weist zudem einen Luftauslass 22 auf, welcher in den Fahrgastraum 4 des Kraftfahrzeugs 1 mündet.

Wie in der Fig. 2 mit gestrichelten Linien angedeutet ist, wird die Frischluft mittels des Ventilators 18 durch die Lufteinlassöffnung 9 entsprechend dem Pfeil A angesaugt und gelangt durch den Einlasskanal 12 in den ersten Innenraum 23 des Wasserkastens 10. Im ersten Innenraum 23 umströmt die tropfenhaltige Frischluft das Umlenkelement 16, welches grundsätzlich auch so ausgebildet sein könnte, dass es vom Luftstrom 15 horizontal umströmt wird. Wassertropfen, welche in der angesaugten Frischluft enthalten sind, werden am Umlenkelement 16 abgeschieden, von der inneren Bodenwandung 20 gesammelt und gelangen dann gemäss den Pfeilen C nach unten in die Wasseraustrittsöffnung 17. Durch die Wasseraustrittsöffnung 17 hindurch verlässt das abgeschiedene Wasser den Wasserkasten 10 nach unten hin (Pfeil D). Der von Wassertropfen weitgehend befreite Luftstrom 15 gelangt dann via den Luftkanal 14 in das Klimagerät 7, wo die Luft erwärmt bzw. abgekühlt werden kann. Vom Innern des Klimageräts 7 aus gelangt der Luftstrom 15 dann durch den Luftauslass 22 in den Fahrgastraum 4 (siehe Pfeil B).

Um nun die vom Klimagerät 7 angesaugte Frischluft vorzutemperieren und dadurch den Energiebedarf des Klimageräts 7 zu reduzieren, ist der Wasserkasten 10 als Wärmetauscher ausgebildet, wobei die inneren Wandungen 13, 20 und 21 gemeinsam ein Wärmetauschelement bilden. Zudem weist der Wasserkasten 10 Strukturen auf, welche dazu dienen, Abluft aus dem Fahrgastraum 4 gezielt zu diesem Wärmetauschelement hinzuleiten. Hierzu weist der Wasserkasten 10 eine äussere Seitenwandung 27 auf, welche im Wesentlichen hohlzylindrisch ausgestaltet ist und umlaufend um die innere Seitenwandung 21 herum angeordnet ist. An ihrem unteren Ende geht die äussere Seitenwandung 27 in eine äussere Bodenwandung 26 über, welche die innere Bodenwandung 20 nach unten hin im Wesentlichen vollständig überdeckt. Die äussere Bodenwandung 26 weist eine zentrale Öffnung auf, durch welche hindurch sich das Ablaufrohr 47 erstreckt. An ihrem oberen Ende geht die äussere Seitenwandung 27 in eine äussere Deckenwandung 19 über, welche die innere Deckenwandung 13 nach oben hin im Wesentlichen vollständig überdeckt.

Zusammen mit der inneren Seitenwandung 21, der inneren Bodenwandung 20 und der inneren Deckenwandung 13 begrenzen die äussere Seitenwandung 27, die äussere Bodenwandung 26 und die äussere Deckenwandung 19 einen zweiten Innenraum 28, welcher die innere Seitenwandung 21 umgibt sowie die innere Bodenwandung 20 und die innere Deckenwandung 13 überdeckt. Ein Teil des zweiten Innenraum 28 bildet somit im Bereich der inneren Seitenwandung 21 einen umlaufenden Ringraum.

Im Bereich der äusseren Bodenwandung 26 ist in einem der Stirnwand 6 zugewandten Bereich eine Ansaugleitung 8 vorgesehen, welche von unten her in den zweiten Innenraum 28 mündet. Die Ansaugleitung 8 weist eine Ablufteinlassöffnung 29 auf, welche im Fahrgastraum 4 oder im Motorraum 5 angeordnet sein kann. Im Falle, dass die Ablufteinlassöffnung 29 im Motorraum 5 angeordnet ist, kann die Ansaugleitung 8 an eine weitere Leitung angeschlossen sein, welche sich durch die Stirnwand 6 in den Fahrgastraum 4 hinein erstreckt. Auf der der Stirnwand 6 abgewandten Seite des Wasserkastens 10 ist in einem oberen Bereich der äusseren Seitenwandung 27 eine Abluftauslassöffnung 30 vorgesehen. Diese Abluftauslassöffnung 30 ist in Bezug auf den zweiten Innenraum 28 räumlich diagonal gegenüberliegend zur Ansaugleitung 8 angeordnet, so dass im zweiten Innenraum 28 eine Luftströmung von der Ansaugleitung 8 zur Abluftauslassöffnung 30 hin entstehen kann, die den ersten Innenraum 23 über einen maximalen Bereich umgibt.

Beim Betrieb des Klimageräts 7 wird somit Abluft aus dem Fahrgastraum 4 durch die Ansaugleitung 8 in den zweiten Innenraum 28 des Wasserkastens 10 geleitet. Die bereits temperierte Abluft umströmt im zweiten Innenraum 28 die innere Bodenwandung 20, die innere Deckenwandung 13 sowie die innere Seitenwandung 21, wodurch die Temperatur der Abluft auf die den ersten Innenraum 23 durchströmende Frischluft übertragen wird. Die im ersten Innenraum 23 vorhandene Frischluft wird dadurch vortemperiert. Die durch die Ansaugleitung 8 geleitete Abluft umströmt somit im Wesentlichen alle den ersten Innenraum 23 begrenzenden Wandungen. Via die Abluftauslassöffnung 30 verlässt die Abluft den Wasserkasten 10 dann in Richtung des Pfeiles E.

Um eine effizientere Übertragung der thermischen Energie zu ermöglichen, können an der inneren Seitenwandung 21 und/oder an der inneren Deckenwandung 13 und/oder an der inneren Bodenwandung 20 auf der Innenseite im ersten Innenraum 23 und/oder auf der Aussenseite im zweiten Innenraum 28 Wärmetauschstrukturen zum Vergrössern der jeweiligen Oberflächen vorhanden sein. Dabei kann es sich beispielsweise um Rippen, Rillen, Vorsprünge oder andere, dem Fachmann hinlänglich bekannte und dafür entsprechend geeignete Strukturen handeln. Insbesondere bevorzugt sind die innere Seitenwandung 21 und/oder die innere Deckenwandung 13 und/oder die innere Bodenwandung 20 zumindest teilweise gewellt ausgebildet.

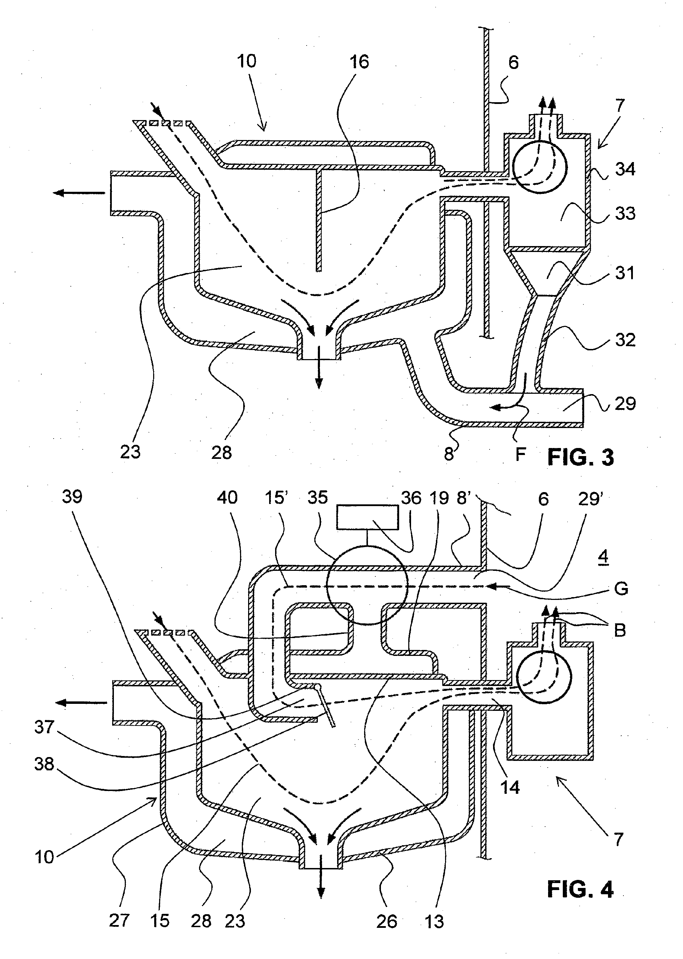

Alternative Ausführungsformen der Erfindung sind in den Fig. 3 bis 6 gezeigt, wobei gleiche oder ähnliche Merkmale jeweils mit den gleichen Bezugszeichen bezeichnet sind.

In Vergleich zur Ausführungsform der Fig. 2 weist das Gehäuse 34 des Klimageräts 7 der Ausführungsform der Fig. 3 zusätzlich eine im unteren Bereich angeordnete Wasseraustrittsöffnung 31 auf. Die trichterförmig ausgestaltete Wasseraustrittöffnung 31 sammelt das im Innenraum 33 des Klimageräts 7 anfallende Wasser, bei welchem es sich insbesondere um Kondenswasser handelt, und führt dieses einer Verbindungsleitung 32 zu. Via die Verbindungsleitung 32 gelangt das Wasser entsprechend dem Pfeil F in die Ansaugleitung 8, in welcher es die Abluft befeuchtet und aufgrund des Verdunstungseffektes abkühlt. Auf diese Weise kann die aus dem Fahrgastraum 4 angesaugte Abluft vorgekühlt werden, womit eine grössere Kühlwirkung in Bezug auf die im ersten Innenraum 23 des Wasserkastens 10 enthaltene Frischluft erzielt werden kann. In einer alternativen Ausführungsform könnte die Verbindungsleitung 32 anstatt in die Ansaugleitung 8 auch direkt in den zweiten Innenraum 28 des Wasserkastens 10 münden.

Bei der in der Fig. 4 gezeigten Ausführungsform wird Abluft aus dem Fahrgastraum 4 durch eine Ablufteinlassöffnung 29' via eine Ansaugleitung 8'direkt in den ersten Innenraum 23 des Wasserkastens 10 geleitet (siehe der gestrichelt dargestellte Luftstrom 15'). Im ersten Innenraum 23 wird die Abluft mit der angesaugten Frischluft vermengt, wodurch die Frischluft vortemperiert wird. Zusätzlich wird dadurch der Feuchtigkeitsgehalt der Luft, welche dem Fahrgastraum 4 zugeführt wird, reduziert. Vorteilhaft ist ein Bogen 39 vorgesehen, welcher den Luftstrom 15' in eine Richtung in den ersten Innenraum 23 hinein führt, die möglichst parallel zum Luftstrom 15 liegt und insbesondere zum Luftkanal 14 hin weist. Der Bogen 39 weist somit eine im ersten Innenraum 23 angeordnete Austrittsöffnung 37 auf. Diese kann mit einer Klappe 38 verschliessbar sein. Das Verschliessen kann dabei rein passiv erfolgen, oder aber die Klappe 38 kann aktiv ansteuerbar sein. Das Vorsehen eines Umlenkelements 16 kann bei allen Ausführungsformen, aber insbesondere bei der vorliegenden entsprechend der Fig. 4 durchaus entfallen.

Um die den ersten Innenraum 23 durchströmende Frischluft bei der in der Fig. 4 gezeigten Ausführungsform vorzutemperieren, ist eine Verbindungsleitung 40 vorgesehen, welche die Ansaugleitung 8' und die äussere Deckenwandung 19 miteinander verbindet. Ein Teil der entsprechend dem Pfeil G durch die Ablufteinlassöffnung 29' angesaugten Abluft gelangt somit über die Verbindungsleitung 40 in den zweiten Innenraum 28. Ein Ventil 35 bestimmt dabei die Menge an Abluft, die durch die Verbindungsleitung 40 in den zweiten Innenraum 28 gelangt sowie die Menge, die durch den Bogen 39 in den ersten Innenraum 23 gelangt. Das Ventil 35 ist mit einer Steuervorrichtung 36 verbunden und von dieser ansteuerbar.

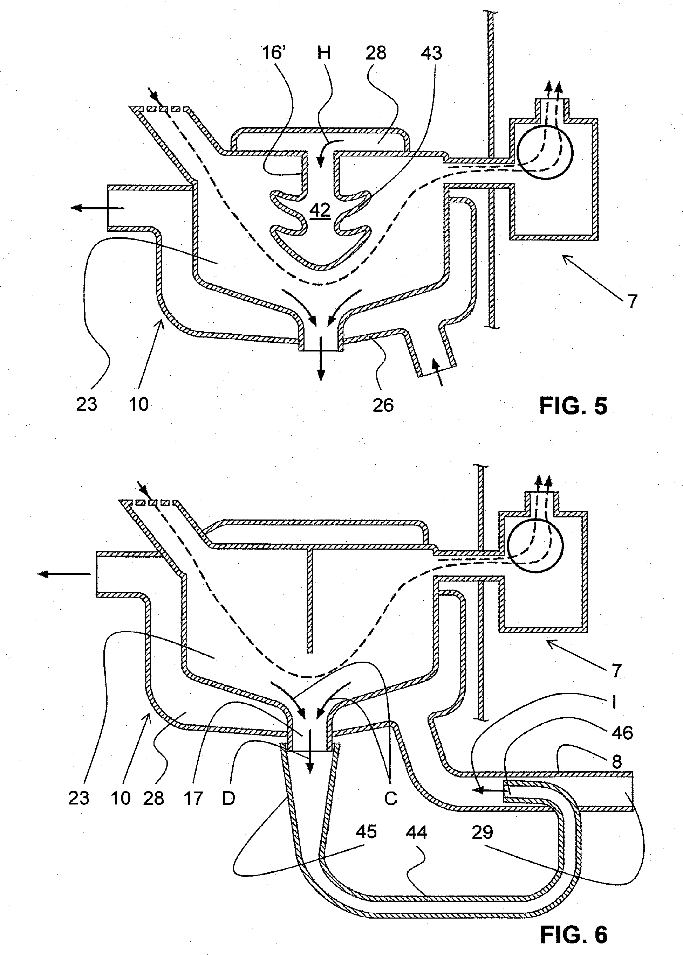

Bei der in der Fig. 5 gezeigten Ausführungsform ist ein Umlenkelement 16' vorgesehen, welches im Vergleich zur Ausführungsform entsprechend der Fig. 2 einen Hohlraum 42 aufweist, durch welchen die Abluft aus dem zweiten Innenraum 28 hineinströmen kann (siehe Pfeil H). Der Hohlraum 42 stellt somit also eine Erweiterung des zweiten Innenraums 28 dar. Um die für den Wärmetausch wirksame Oberfläche des Umlenkelements 16' zu vergrössern, ist ein gewellter Bereich 43 vorhanden, welcher durch umlaufende Rillen gebildet wird. Im Bereich dieses gewellten Bereiches 43, welcher eine Wärmetauschstruktur bildet, sind die Seitenwände des Umlenkelements 16', welche den Hohlraum 42 begrenzen, jeweils nach aussen hin in den ersten Innenraum 23 hinein gebogen bzw. gewölbt. Die nach aussen hin weisenden Erhebungen des gewellten Bereiches 43 sind jeweils leicht nach oben hin gebogen. Das Vorhandensein eines derartigen gewellten Bereiches 43 am Umlenkelement 16' verbessert nicht nur die Übertragung der thermischen Energie von Abluft auf die im ersten Innenraum 23 enthaltene Frischluft, sondern bewirkt auch eine bessere Tropfenabscheidung, da das Umlenkelement 16' als Tropfenfänger wirkt. Um das Ablaufen der abgeschiedenen Tropfen vom Umlenkelement 16' zu verbessern, könnte anstatt einer Mehrzahl von Rillen alternativ auch eine einzige Rille vorhanden sein, welche das Umlenkelement 16' spiralförmig umläuft. In einer alternativen Ausführungsform könnte zudem im Hohlraum 42 ein beliebig ausgestalteter Kanal vorgesehen sein, welche die Abluft entlang der Oberfläche des Umlenkelementes 16' zuerst nach unten und dann wieder zurück nach oben leitet.

In der in Fig. 6 gezeigten Ausführungsform ist im Vergleich zum Ausführungsbeispiel der Fig. 2 zusätzlich eine Verbindungsleitung 44 vorgesehen, welche abgeschiedenes Wasser, das in Richtung des Pfeiles D durch die Wasseraustrittsöffnung 17 aus dem ersten Innenraum 23 austritt, in Richtung des Pfeiles I in die Ansaugleitung 8 leitet. Die Verbindungsleitung 44 ist dazu mit einem Auffangtrichter 45 verbunden, der an der Wasseraustrittsöffnung 17 angeschlossen ist. Auf der dem Auffangtrichter 45 gegenüberliegenden Ende weist die Verbindungsleitung 44 eine Auslassöffnung 46 auf, welche im Innern der Ansaugleitung 8 angeordnet ist. Das gesammelte Wasser vermischt sich in der Ansaugleitung 8 mit der Abluft und befeuchtet diese. Die Abluft kühlt sich dadurch aufgrund des Verdunstungseffekts ab. Auf diese Weise kann eine verbesserte Kühlwirkung der Frischluft, welche den ersten Innenraum 23 des Wasserkastens 10 durchströmt, erzielt werden.

Die innere Bodenwandung 20, die innere Seitenwandung 21, die innere Deckenwandung 13 sowie die Wandung des Umlenkelementes 16' weisen bevorzugt jeweils eine Wandstärke von weniger als 1 mm, insbesondere von weniger als 0.5 mm auf. Dadurch wird eine gute Wärmeleitfähigkeit erreicht. Die Wandstärke der äusseren Wandungen, also der äusseren Seitenwandung 27, der äusseren Bodenwandung 26 und der äusseren Deckenwandung 19, ist bevorzugt jedoch grösser als 2 mm, um eine gute mechanische Stabilität sowie eine bessere Isolierung des Wasserkastens 10 nach aussen hin zu erreichen.

In den vorliegenden Ausführungsformen sind die Wandungen des Wasserkastens 10 jeweils aus Polypropylen mit einem Anteil von 20 % Talkum hergestellt. Alternativ könnten diese Wandungen aber natürlich auch aus einem anderen Material hergestellt sein. Insbesondere im Falle der inneren Wandungen könnte zum Beispiel ein gut wärmeleitendes Material, wie zum Beispiel Metall, verwendet werden.

Selbstverständlich ist die hier beschriebene Erfindung nicht auf die erwähnten Ausführungsformen beschränkt und eine Vielzahl von Abwandlungen ist möglich. So könnte der erste Innenraum 23 des Wasserkastens 10 zum Beispiel geometrisch beliebig anders ausgestaltet sein. Der Wasserkasten 10 muss zudem beispielsweise nicht zwingend einen zweiten Innenraum 28 aufweisen. Es könnte zum Beispiel im ersten Innenraum 23 auch eine schlangenförmige Leitung vorgesehen sein, durch welche die Abluft hindurchströmt. Anstatt oder zusätzlich zu den inneren Wandungen 13, 20 und 21 würde dann diese schlangenförmige Leitung das Wärmetauschelement bilden. Das Klimagerät 7 könnte zudem auch vollständig im Motorraum 5 angeordnet sein. Im Wasserkasten 10 können auch weitere Elemente, wie zum Beispiel eine Notaustrittsöffnung für das abgeschiedene Wasser, vorgesehen sein. Die verschiedenen Elemente der in den Figuren 1 bis 6 gezeigten Ausführungsformen können zudem selbstverständlich beliebig miteinander kombiniert werden. Eine Vielzahl weiterer Abwandlungen ist denkbar.

**BEZUGSZEICHENLISTE**

| | | | |
|---|---|---|---|
| 1 | Kraftfahrzeug | 26 | Äussere Bodenwandung |
| 2 | Windschutzscheibe | 27 | Äussere Seitenwandung |
| 3 | Motorhaube | 28 | Zweiter Innenraum |
| 4 | Fahrgastraum | 29, 29' | Ablufteinlassöffnung |
| 5 | Motorraum | 30 | Abluftauslassöffnung |
| 6 | Stirnwand | 31 | Wasseraustrittsöffnung |
| 7 | Klimagerät | 32 | Verbindungsleitung |
| 8, 8' | Ansaugleitung | 33 | Innenraum |
| 9 | Lufteinlassöffnung | 34 | Gehäuse |
| 10 | Wasserkasten | 35 | Ventil |
| 11 | Gitter | 36 | Steuervorrichtung |
| 12 | Einlasskanal | 37 | Austrittsöffnung |
| 13 | Innere Deckenwandung | 38 | Klappe |
| 14 | Luftkanal | 39 | Bogen |
| 15, 15' | Luftstrom | 40 | Verbindungsleitung |
| 16, 16' | Umlenkelement | 41 | Fahrgastsitz |
| 17 | Wasseraustrittsöffnung | 42 | Hohlraum |
| 18 | Ventilator | 43 | Gewellter Bereich |
| 19 | Äussere Deckenwandung | 44 | Verbindungsleitung |
| 20 | Innere Bodenwandung | 45 | Auffangtrichter |
| 21 | Innere Seitenwandung | 46 | Auslassöffnung |
| 22 | Luftauslass | 47 | Ablaufrohr |
| 23 | Erster Innenraum | | |
| 24 | Zuleitung | A-I | Pfeile |
| 25 | Luftauslassöffnung | | |

## Patentansprüche

1. Wasserkasten (10) für ein Kraftfahrzeug (1), aufweisend
eine Wandung (13, 20, 21), welche einen ersten Innenraum (23) begrenzt,
zumindest eine Lufteinlassöffnung (9), durch welche hindurch Luft in den ersten Innenraum (23) einströmen kann,
zumindest eine Luftauslassöffnung (25), durch welche hindurch Luft aus dem ersten Innenraum (23) ausströmen kann, und
zumindest eine Wasseraustrittsöffnung (17), welche zum Abführen von Wasser aus dem ersten Innenraum (23) geeignet ist,
**dadurch gekennzeichnet, dass**
der Wasserkasten (10) als Wärmetauscher ausgebildet ist, mit einem Wärmetauschelement (13, 20, 21; 16'), welches dazu dient, thermische Energie von Abluft in den ersten Innenraum (23) zu übertragen, und dass der Wasserkasten (10) zumindest eine Struktur (8, 26, 27, 40; 8') aufweist, welche dazu dient, Abluft gezielt zum Wärmetauschelement (13, 20, 21; 16') hin zu leiten.

2. Wasserkasten (10) nach Anspruch 1, wobei zumindest ein Teil der Wandung (13, 20, 21), welche den ersten Innenraum (23) begrenzt, das Wärmetauschelement bildet.

3. Wasserkasten (10) nach Anspruch 2, wobei im Wesentlichen die gesamte Wandung (13, 20, 21), welche den ersten Innenraum (23) begrenzt, das Wärmetauschelement bildet.

4. Wasserkasten (10) nach einem der vorhergehenden Ansprüche, wobei die Struktur (8, 26, 27, 40) zusammen mit dem Wärmetauschelement (13, 20, 21) einen zweiten Innenraum (28) begrenzt, und wobei eine Ablufteinlassöffnung (29) vorhanden ist, durch welche hindurch Abluft in den zweiten Innenraum (28) einströmen kann, sowie eine Abluftauslassöffnung (30) vorhanden ist, durch welche hindurch Abluft aus dem zweiten Innenraum (28) ausströmen kann.

5. Wasserkasten (10) nach Anspruch 4, wobei die Wandung (13, 20, 21), welche den ersten Innenraum (23) begrenzt, eine umlaufende Seitenwandung (21) umfasst, und wobei der zweite Innenraum (28) diese Seitenwandung (21) im Wesentlichen vollständig umgibt.

6. Wasserkasten (10) nach einem der Ansprüche 4 oder 5, wobei die Wandung (13, 20, 21), welche den ersten Innenraum (23) begrenzt, eine Bodenwandung (20) umfasst, innerhalb welcher die Wasseraustrittsöffnung (17) angeordnet ist, und wobei der zweite Innenraum (28) diese Bodenwandung (20) zu einem grossen Teil überdeckt.

7. Wasserkasten (10) nach einem der Ansprüche 4 bis 6, wobei die Wandung (13, 20, 21), welche den ersten Innenraum (23) begrenzt, eine Deckenwandung (13) umfasst, und wobei der zweite Innenraum (28) diese Deckenwandung (13) zu einem grossen Teil überdeckt.

8. Wasserkasten (10) nach einem der Ansprüche 4 bis 7, wobei die Wasseraustrittsöffnung (17) seitlich umlaufend von der Innenfläche eines Ablaufrohrs (47) begrenzt ist, welches sich durch den zweiten Innenraum (28) hindurch erstreckt.

9. Wasserkasten (10) nach einem der vorhergehenden Ansprüche, ausserdem aufweisend ein im ersten Innenraum (23) angeordnetes Umlenkelement (16; 16'), welches zum Abscheiden von Wasser aus der den ersten Innenraum (23) durchströmenden Luft dient, wobei das Umlenkelement (16; 16') einen Hohlraum (42) aufweist, der dazu geeignet ist, von Abluft durchströmt zu werden.

10. Wasserkasten (10) nach einem der vorhergehenden Ansprüche, wobei das Wärmetauschelement (13, 20, 21, 16') Wärmetauschstrukturen (43) zum Vergrössern der Oberfläche des Wärmetauschelements (13, 20, 21, 16') aufweist.

11. Wasserkasten (10) nach einem der vorhergehenden Ansprüche, wobei der Wasserkasten (10) zumindest eine Leitung (44) aufweist, um zumindest einen Teil des aus der Wasseraustrittsöffnung (17) ausströmenden Wassers zum Wärmetauschelement (13, 20, 21, 16') hin zu leiten.

12. Wasserkasten (10) nach einem der vorhergehenden Ansprüche, wobei das Wärmetauschelement (13, 20, 21, 16') eine Wandstärke von weniger als 1 mm, insbesondere von weniger als 0.5 mm, aufweist.

13. Verfahren zur Temperierung des Wasserkastens (10) eines Kraftfahrzeugs (1), aufweisend die folgenden Schritte:
- Bereitstellen eines Klimageräts (7) mit einem Luftfördermittel (18), sowie eines als Wärmetauscher ausgebildeten Wasserkastens (10), nach einem der Ansprüche 1 bis 12, mit einer Lufteinlassöffnung (9) und einem Wärmetauschelement (13, 20, 21; 16') in einem Kraftfahrzeug (1);
- Ansaugen von Frischluft mittels des Luftfördermittels (18) durch die Lufteinlassöffnung (9) und den Wasserkasten (10) hindurch zum Klimagerät (7), und Weiterleiten dieser Luft vom Klimagerät (7) in einen Fahrgastraum (4) des Kraftfahrzeugs (1); wobei
das Verfahren zudem den Schritt aufweist, Abluft gezielt zum Wärmetauschelement (13, 20, 21; 16') hin zu leiten, um dadurch die Frischluft, welche durch den Wasserkasten (10) hindurch strömt, zu temperieren.

14. Kraftfahrzeug (1) aufweisend
einen Fahrgastraum (4),
ein Klimagerät (7) mit einem Luftfördermittel (18), und
einen Wasserkasten (10) nach einem der Ansprüche 1 bis 12, der als Wärmetauscher ausgebildet ist und ein Wärmetauschelement (13, 20, 21; 16') sowie eine Lufteinlassöffnung (9) aufweist, an welcher mittels des Luftfördermittels (18), Frischluft ansaugbar ist, die durch den Wasserkasten (10) zum Klimagerät (7) und von diesem in den Fahrgastraum (4) gelangt,
wobei zudem zumindest eine Struktur (8, 26, 27, 40; 8') vorhanden ist, welche dazu dient, Abluft gezielt zum Wärmetauschelement (13, 20, 21; 16') des Wasserkastens (10) hin zu leiten.

15. Kraftfahrzeug (1) nach Anspruch 14, wobei das Kraftfahrzeug (1) zumindest eine Leitung (32) aufweist, um zumindest einen Teil des Wasser, das im Klimagerät (7) anfällt, zum Wärmetauschelement (13, 20, 21, 16') hin zu leiten.

## Claims

1. Water box (10) for a motor vehicle (1), having
a wall (13, 20, 21) which bounds a first interior space (23),
at least one air inlet opening (9) through which air can flow into the first interior space (23),
at least one air outlet opening (25) through which air can flow out of the first interior space (23), and
at least one water exit opening (17) which is suitable for removing water from the first interior space (23),
**characterized**
**in that** the water box (10) is designed as a heat exchanger, with a heat-exchange element (13, 20, 21; 16') which serves to transmit thermal energy from exhaust air into the first interior space (23), and in that the water box (10) has at least one structure (8, 26, 27, 40; 8') which serves to conduct exhaust air in a targeted manner to the heat-exchange element (13, 20, 21; 16').

2. Water box (10) according to Claim 1, wherein at least part of the wall (13, 20, 21) which bounds the first interior space (23) forms the heat-exchange element.

3. Water box (10) according to Claim 2, wherein essentially the entire wall (13, 20, 21) which bounds the first interior space (23) forms the heat-exchange element.

4. Water box (10) according to one of the preceding claims, wherein the structure (8, 26, 27, 40) together with the heat-exchange element (13, 20, 21) bounds a second interior space (28), and wherein there is an exhaust-air inlet opening (29) through which exhaust air can flow into the second interior space (28), and also there is an exhaust-air outlet opening (30) through which exhaust air can flow out of the second interior space (28).

5. Water box (10) according to Claim 4, wherein the wall (13, 20, 21) which bounds the first interior space (23) comprises a circumferential side wall (21), and wherein the second interior space (28) substantially completely surrounds said side wall (21).

6. Water box (10) according to either of Claims 4 and 5, wherein the wall (13, 20, 21) which bounds the first interior space (23) comprises a bottom wall (20), within which the water exit opening (17) is arranged, and wherein the second interior space (28) covers a large portion of said bottom wall (20).

7. Water box (10) according to one of Claims 4 to 6, wherein the wall (13, 20, 21) which bounds the first interior space (23) comprises a top wall (13), and wherein the second interior space (28) covers a large portion of said top wall (13).

8. Water box (10) according to one of Claims 4 to 7, wherein the water exit opening (17) is laterally and circumferentially bounded by the inner surface of a drain pipe (47) which extends through the second interior space (28).

9. Water box (10) according to one of the preceding claims, also having a deflecting element (16; 16') which is arranged in the first interior space (23) and serves to separate water from the air flowing through the first interior space (23), wherein the deflecting element (16; 16') has a cavity (42) which is suitable for exhaust air to flow therethrough.

10. Water box (10) according to one of the preceding claims, wherein the heat-exchange element (13, 20, 21, 16') has heat-exchange structures (43) for enlarging the surface of the heat-exchange element (13, 20, 21, 16').

11. Water box (10) according to one of the preceding claims, wherein the water box (10) has at least one conduit (44) in order to conduct at least some of the water flowing out of the water exit opening (17) to the heat-exchange element (13, 20, 21, 16').

12. Water box (10) according to one of the preceding claims, wherein the heat-exchange element (13, 20, 21, 16') has a wall thickness of less than 1 mm, in particular of less than 0.5 mm.

13. Method for tempering the water box (10) of a motor vehicle (1), having the following steps:
- providing an air conditioning unit (7) with an air-conveying means (18), and also a water box (10) designed as a heat exchanger, according to one of Claims 1 to 12, with an air inlet opening (9) and a heat-exchange element (13, 20, 21; 16') in a motor vehicle (1);
- sucking up fresh air by means of the air-conveying means (18) through the air inlet opening (9) and the water box (10) to the air conditioning unit (7), and conducting said air further from the air conditioning unit (7) into a passenger room (4) of the motor vehicle (1);
wherein the method also has the step of conducting exhaust air in a targeted manner to the heat-exchange element (13, 20, 21; 16') in order thereby to temper the fresh air which flows through the water box (10).

14. Motor vehicle (1), having
a passenger room (4),
an air conditioning unit (7) with an air-conveying means (18), and
a water box (10) according to one of Claims 1 to 12, which water box is designed as a heat exchanger and has a heat-exchange element (13, 20, 21; 16') and also an air inlet opening (9) at which fresh air can be sucked up by means of the air-conveying means (18), the fresh air passing through the water box (10) to the air conditioning unit (7) and from the latter into the passenger room (4),
wherein, in addition, there is at least one structure (8, 26, 27, 40; 8') which serves to conduct exhaust air in a targeted manner to the heat-exchange element (13, 20, 21; 16') of the water box (10).

15. Motor vehicle (1) according to Claim 14, wherein the motor vehicle (1) has at least one conduit (32) in order to conduct at least some of the water which arises in the air conditioning unit (7) towards the heat-exchange element (13, 20, 21, 16').

## Revendications

1. Boîte d'eau (10) pour un véhicule automobile (1), comportant :
une paroi (13, 20, 21) délimitant un premier espace intérieur (23) ;
au moins une ouverture d'admission d'air (9) à travers laquelle l'air peut être introduit dans le premier espace intérieur (23) ;
au moins une ouverture de sortie d'air (25) à travers laquelle l'air peut sortir du premier espace intérieur (23) ; et
au moins une ouverture de sortie d'eau (17) adaptée pour évacuer l'eau hors du premier espace intérieur (23) ;
**caractérisé en ce que** :
la boîte d'eau (10) prend la forme d'un échangeur thermique, avec un élément d'échange thermique (13, 20, 21 ; 16') servant à transmettre l'énergie thermique de l'air vicié dans le premier espace intérieur (23) et que la boîte d'eau (10) présente au moins une structure (8, 26, 27, 40 ; 8') servant à amener l'air vicié de façon ciblée vers l'élément d'échange thermique (13, 20, 21 ; 16').

2. Boîte d'eau (10) selon la revendication 1, au moins une partie de la paroi (13, 20, 21) délimitant le premier espace intérieur (23) formant l'élément d'échange thermique.

3. Boîte d'eau (10) selon la revendication 2, la totalité de la paroi (13, 20, 21) délimitant le premier espace intérieur (23) formant pour l'essentiel l'élément d'échange thermique.

4. Boîte d'eau (10) selon l'une quelconque des revendications précédentes, la structure (8, 26, 27, 40) délimitant, conjointement avec l'élément d'échange thermique (13, 20, 21), un deuxième espace intérieur (28) et une ouverture d'admission d'air vicié (29) étant présente à travers laquelle l'air vicié peut être introduit dans le deuxième espace intérieur (28) et une ouverture de sortie d'air vicié (30) étant présente à travers laquelle l'air vicié peut sortir du deuxième espace intérieur (28).

5. Boîte d'eau (10) selon la revendication 4, la paroi (13, 20, 21) délimitant le premier espace intérieur (23) comprenant une paroi latérale (21) périphérique et le deuxième espace intérieur (28) ceignant pour l'essentiel entièrement cette paroi latérale (21).

6. Boîte d'eau (10) selon l'une quelconque des revendications 4 ou 5, la paroi (13, 20, 21) délimitant le premier espace intérieur (23) comprenant une paroi de fond (20) à l'intérieur de laquelle l'ouverture de sortie d'eau (17) est disposée et le deuxième espace intérieur (28) recouvrant en grande partie cette paroi de fond (20).

7. Boîte d'eau (10) selon l'une quelconque des revendications 4 à 6, la paroi (13, 20, 21) délimitant le premier espace intérieur (23) comprenant une paroi de plafond (13) et le deuxième espace intérieur (28) recouvrant en grande partie cette paroi de plafond (13).

8. Boîte d'eau (10) selon l'une quelconque des revendications 4 à 7, l'ouverture de sortie d'eau (17) étant délimitée de façon périphérique en côté par la surface intérieure d'un tuyau d'évacuation (47) s'étendant à travers le deuxième espace intérieur (28).

9. Boîte d'eau (10) selon l'une quelconque des revendications précédentes, comportant en outre un élément de déviation (16 ; 16') disposé dans le premier espace intérieur (23) servant à la séparation de l'eau provenant du premier espace intérieur (23) et de l'air traversant, l'élément de déviation (16 ; 16') comportant un espace creux (42) adapté à la circulation de l'air vicié.

10. Boîte d'eau (10) selon l'une quelconque des revendications précédentes, l'élément d'échange thermique (13, 20, 21, 16') comportant des structures d'échange thermique (43) permettant d'accroître la surface de l'élément d'échange thermique (13, 20, 21, 16').

11. Boîte d'eau (10) selon l'une quelconque des revendications précédentes, la boîte d'eau (10) comportant au moins une conduite (44) permettant d'amener au moins une partie de l'eau sortant de l'ouverture de sortie d'eau (17) à l'élément d'échange thermique (13, 20, 21, 16').

12. Boîte d'eau (10) selon l'une quelconque des revendications précédentes, l'élément d'échange thermique (13, 20, 21, 16') comportant une épaisseur de paroi inférieure à 1 mm, notamment inférieure à 0,5 mm.

13. Procédé de tempérage de la boîte d'eau (10) d'un véhicule automobile (1), comportant les étapes suivantes :
- mise à disposition d'une climatisation (7) avec un moyen de transport d'air (18) ainsi qu'une boîte d'eau (10) prenant la forme d'un échangeur thermique selon l'une quelconque des revendications 1 à 12, avec une ouverture d'admission d'air (9) et un élément d'échange thermique (13, 20, 21 ; 16'), dans un véhicule automobile (1) ;
- aspiration d'air frais à l'aide du moyen de transport d'air (18) à travers l'ouverture d'admission d'air (9) et la boîte d'eau (10) jusqu'à la climatisation (7) et poursuite du transport de cet air de la climatisation (7) jusque dans l'habitacle (4) du véhicule automobile (1) ;
le procédé comprenant en outre l'étape consistant à amener l'air vicié de façon ciblée à l'élément d'échange thermique (13, 20, 21 ; 16') pour ainsi tempérer l'air frais s'écoulant à travers la boîte d'eau (10).

14. Véhicule automobile (1) comportant :
un habitacle (4) ;
une climatisation (7) dotée d'un moyen de transport d'air (18) ; et
une boîte d'eau (10) selon l'une quelconque des revendications 1 à 12 prenant la forme d'un échangeur thermique et comportant un élément d'échange thermique (13, 20, 21 ; 16') ainsi qu'une ouverture d'admission d'air (9) au niveau de laquelle l'air frais peut être aspiré pour traverser la boîte d'eau (10) et atteindre la climatisation (7) et être amené de là dans l'habitacle (4) à l'aide du moyen de transport d'air (18) ;
au moins une structure (8, 26, 27, 40 ; 8') étant en outre présente pour amener l'air vicié de façon ciblée jusqu'à l'élément d'échange thermique (13, 20, 21 ; 16') de la boîte d'eau (10).

15. Véhicule automobile (1) selon la revendication 14, le véhicule automobile (1) comportant au moins une conduite (32) permettant d'amener au moins une partie de l'eau arrivant dans la climatisation (7) à l'élément d'échange thermique (13, 20, 21, 16').
